# EUROPEAN PATENT SPECIFICATION

(11) **EP 0 560 186 B1**
(45) Date of publication and mention of the grant of the patent: **28.05.1997**
(21) Application number: 93103356.7
(22) Date of filing: 03.03.1993
(51) Int. Cl.: H02P 7/622, H02H 7/08, H02P 5/418

(54) **Pilot circuit of an electric motor, of the type used for producing the rotation of a drum of a laundry washing machine**
Steuerschaltung für einen elektrischen Motor vom Typ zur Erzeugung der Rotation der Trommel einer Waschmaschine
Circuit de pilotage pour un moteur électrique de type utilisé pour la rotation d'un tambour d'une machine à laver le linge

(30) Priority: 09.03.1992 IT TO920194
(43) Date of publication of application: 15.09.1993
(73) Proprietor: BITRON S.p.A., 10095 Grugliasco (Torino) (IT)
(72) Inventor: Mandara, Francescopaolo, I-10134 Torino (IT)
(74) Representative: Lotti, Giorgio

(56) References cited:
- EP-A- 0 102 659
- EP-A- 0 349 923
- ELEKTROTECHNIK vol. 62, no. 18 , September 1980 , WURZBURG DE pages 94 - 95 'Aktuelle Schaltungen'

## Description

The present invention refers to a control circuit of a load, in particular of an electric motor for producing the rotation of a drum of a laundry washing machine, comprising an electronic circuit that detects the rotation speed of the motor and that controls a first controlled switch, through which the rotation speed of the motor is regulated, varying the time periods during which an electric supply is supplied to the motor.

It is known that normally a laundry washing machine has a rotary basket, wherein the laundry is placed, which is actuated by an electric motor through a pulley and a belt.

The rotation speed of the basket is necessarily variable and varies from a dozen or so revolutions a minute during the washing phases, up to a thousand revolutions a minute during the spinning and drying phase. Also during the spinning phase it is normal use to vary the rotation speed of the basket through external manual settings.

For this purpose motors are used that have a wide speed range within which they can be used.

For such types of application, "universal" type motors are used, which can be energised both in direct current and in alternating current. They have a typical structure of a direct current motor with excitation in series.

The variation of the speed of the motor is obtained through a so-called phase angle control. This means that a controlled switch is connected in series to the electric motor, for example a triac, which is closed during a determined part of each period of mains supply voltage.

The variation of the closure time of the controlled switch produces a variation in the current supplied by the mains supply to the motor and as a result determines the variation of the rotation speed of the electric motor of the laundry washing machine.

Greater the closure time of the controlled switch, greater the rotation speed of the drum of the electric motor. The closure time of said controlled switch is determined by an appropriate electronic circuit, which, through its output terminal, provides the necessary information for determining the speed of the electric motor and, as a result, of the drum according to the washing phases in which the laundry washing machine is to be found.

A problem that can occur in laundry washing machines of the type described above is a great increase of the rotation speed of the drum due to a short circuit of the controlled switch. Such a case could cause serious damages both to the structure of the laundry washing machine, and to the user; in fact as shortcircuiting is an unpredictable event, it could occur when the drum, besides containing clothes to be washed, is full of water. The displacement of such a consistent mass due to the very-high speed of which the drum is rotated by the motor would cause serious damage to the mechanical structure of the machine, which would not be able to tolerate such stress.

A further problem that could arise, in laundry washing machines of the tumble dryer type, is constituted by the eventuality that a possible short circuit of the controlled switch occur during the drying phase of the laundry. During such phase it is possible to open the hatch of the machine for allowing the user to verify whether the laundry contained in the drum is sufficiently dry. Obviously during the aforementioned functional phase of the laundry washing machine the rotation speed of the drum, and as a result the rotation speed of the electric motor, is very low. The great increase of the rotation speed of the drum that is verified due to a short circuit of the ends of the controlled switch could, as a result, cause serious accidents to the user if, in the actual moment in which the short circuit is verified, he happens to have an arm inside the drum for ascertaining the dryness of the laundry.

For obviating drawbacks such as those described above, it has been considered, among other solutions, to provide, in series to the electric motor and to the controlled switch a safety switch, as for example a relay.

Such relay being commanded by a detection circuit of short circuits of the controlled switch, is actuated to open its contacts, therefore removing supply from the electric motor, each time that at the ends of the controlled switch, normally a triac, a shortcircuit is verified detected for example by an abnormal increase in the rotation speed of the motor.

The use of a relay in a control circuit such as that described above does have drawbacks such as size, weight and costs for reasons of sizing, in fact it has to be sized so as to substantially allow the passing of the current that feeds the electric motor.

Furthermore both the system described and other systems utilized in the practice, all have the drawback of having to provide a revolution detector device of the electric motor in order to intervene in the case of anomalous functioning of the laundry washing machine.

As can be noted in such types of control circuits the safety system of the control circuit only intervenes in the case in which a malfunction has already been verified, i.e. does not prevent the conditions of malfunctioning of the machine from occuring. The above provided systems moreover intervene with a delay if compared to the occurance of the anomalous functioning of the circuit. Such delay can also cause the safety circuit to be able to intervene only after that damages to the laundry washing machine have already been verified.

It is unthinkable to utilize a fuse in replacement of the relay, as when the controlled switch of an electronic circuit is short circuited, the current that passes in the motor is of a value not far from that normally admissable; therefore if the fuse is sized so as to bear a current being far higher than that which normally circulates in the motor it would practically never intervene, while if the fuse is sized to only bear an intensity of the current being slightly higher than that which normally circulates in the electric motor, it could open the circuit even when it is not necessary, for instance on veryfying an extra voltage that is generated in the coils of the electric motor (being an inductive load).

The preamble of claim 1 is based on EP-A-349923 which discloses a control circuit of an electric motor comprising two controlled switches connected in series and driven by means of respective transformer coupling; each of the switches being, further, insulated from the control circuit.

This the aim of the present invention is that of obtaining a control circuit that does not have the drawbacks described above and at the same time results in being simple, reliable and of low cost.

Therefore, for allowing such aims the present invention has as its subject a control circuit for an electric motor for producing the rotation of a drum of a laundry washing machine according to claim 1.

Further aims and advantages of the present invention will result in being clear from the detailed description that follows, and from the annexed drawings supplied as a purely explanatory and non-limiting example, wherein a control circuit for an electric motor according to the invention is illustrated.

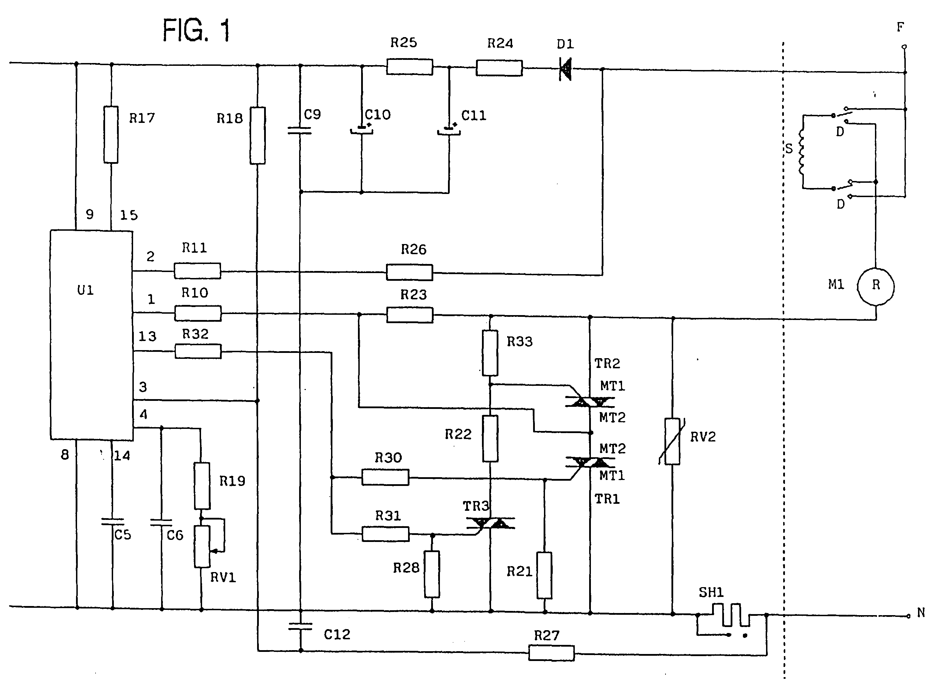

In the figure with U1 an electronic circuit is indicated, in particular a specific integrated circuit by the firm Motorola identified with the initials TDA 1085, the technical specifications of which are available for a greater understanding of its way of operating and of the values of the components to which it must be associated for a correct functioning.

To pins 1 and 13 of said integrated circuit U1 the resistors R10 and R32 are respectively connected. To the second end of said resistance R10 the first end of a resistor R23 and the point in common of two controlled switchs TR1 and TR2 of the triac type are connected. In series to said triac TR1 and TR2 an electric motor M1 of the universal type is arranged. Such motor M1 is constituted by the connection in series of a stator coil S and of a rotor coil R. Such motor M1 is supplied by way of an alternating current voltage supplied to the ends of two terminals of the circuit, shown respectively with F (phase) and with N (neutral). The stator coil S that generates an excitation field receives voltage through a double shunter D, that has the function of producing the inversion of the rotation sense of the rotor R.

The current running in the motor is regulated based on the opening and dosure time of the two triac TR1 and TR2, mounted in series on the path between a head of the motor M1 and the circuital terminal N.

The two triac TR1 and TR2 are controled by said integrated circuit U1. The two triac TR1 and TR2 are connected in a back to back configuration i.e. with a terminal, indicated with MT2, of the first controlled switch TR1 connected to the terminal, also indicated with MT2, of the second controlled switch TR2. The latter being commanded by a third controlled switch, indicated with TR3, which receives, through a resistor R31, the control signal simultaneously with the first controlled switch TR1 from pin 13 of said specific integrated circuit U1 through the resistor R32. The terminal MT1 of the triac TR1 is connected, through a shunt resistor SH1 to the terminal N of the circuit.

The two resistors R10 and R23 connected in series supply the integrated circuit U1, through the terminal 1, with a current synchronization impulse.

The functioning of the circuit described is the following:
the integrated circuit U1, through its pin 13 provides the specified control timing of the motor M1. In virtue of the current divider constituted by resistors R30 and R31 a first part of the control signal goes directly to the triac TR1 which opens and closes for supplying the electric current necessary for making the electric motor M1 rotate in accordance with the requirements of the washing cycle in which the laundry washing machine is to be found; a second part of the control signal goes to the triac TR3 which in turn commands the second triac TR2 in order to open and close accordingly to the opening and closure operations of the triac first TR1.

The use of a triac as a third controlled switch TR3 allows to pass the control current from phase terminal F to the neutral terminal N and viceversa, in any phase of the half-wave supply period .

This functional condition produces positive consequences. The first of these allows for raising the value of the so called block voltage (i.e. the tolerable maximum voltage); in fact, each time the two triac TR1 and TR2 open, an operation that occurs simultaneously, the value of the actual voltage at their ends, generally rather high, is divided between the two triac TR1 and TR2. In the previously adopted solutions, such as that of using a relay in place of the triac TR2, on the contrary such voltage is supplied in full to the single triac present and that in this case corresponds to the triac TR1. It is necessary in fact to remember that in the solutions with a protection relay, this remains practically always closed during functional phases of the triac; thus in the condition in which the triac operates as an open circuit it has to bear all the voltage that is created at its ends.

Based on the considerations described above it is easy to understand that with the proposed solution the life expectancy of the two triac TR1 and TR2 is surely lengthened, apart from enabling the utilisation of components with minor block voltage, and that the use of a second triac in place of a normal relay does not constitute a simple replacement of an electromechanic element with an electronic element.

The second positive consequence is understandable by analysing the functioning of the control circuit of an electric motor in the case in which a short circuit of the triac TR1 is verified. In the presence of such an event it will occur that the point in common of the two triac TR1 and TR2, will be brought to a very low voltage value (practically to the neutral value) so as that the current synchronization information to the pin 1 of the integrated circuit U1 will no longer arrive. In this functional condition said integrated circuit U1 will stop generating control impulses, so as that the triac TR2 will stop conducting and the motor M1, if it was in motion, will stop.

If the short circuit verified at the ends of the triac TR1 is not permanent, or if it is opportunely removed, the functioning of the control circuit will automatically resume. In fact as the point in common of the two triac TR1 and TR2 will find a potential being different from that of neutral, the current synchronism information will again be supplied to the pin 1 of said integrated circuit U1. As a consequence it occurs that the integrated circuit U1 continues to supply again through the pin 13 command impulses to the triac TR1, TR2 and TR3.

In the case of short circuit of the triac TR2 the functioning of the circuit will in no way be compromised inasmuch the control signal of the electric motor M1 will always be supplied in an opportune way by triac TR1 which continues to function regularly. In this case the control circuit will function as a normal control circuit of a motor for rotating a drum of a laundry washing machine utilising a single triac.

The characteristics of the control circuit of an electric motor, in particular of a motor for the rotation of a drum of a laundry washing machine, are clear from the given description and annexed drawing.

From the given description the advantages of the circuit subject of the present invention are also clear.

In particular they are represented in that the control circuit has a lower cost, a longer duration, a greater functional safety, a high reliability and the applicational simplicity, and also the possibility to automatically restore the motor operation in certain functional cases, when the short circuit is not permanent or when is opportunely removed.

It is clear that numerous variations are possible by the skilled-man to the control circuit of an electric motor, in particular a motor for the rotation of a drum of a laundry washing machine, without departing from the scope of protection of the present invention as claimed.

## Claims

1. A control circuit for an electric motor of the kind used to rotate the drum of a laundry washing machine, comprising an electronic circuit (U1) for detecting the rotating speed of the motor (M1) and controlling a first controlled switch (TR1) for adjusting the rotating speed of the motor (M1) by varying time periods during which the motor (M1) is power supplied; a second controlled switch (TR2) being connected in series to said first controlled switch (TR1) and said electric motor (M1), said second controlled switch (TR2) being controlled by the electronic circuit (U1) so as to conduct substantially in the same time intervals as said first controlled switch (TR1); characterised in that said controlled switches (TR1, TR2) are in a back to back arrangement and said second controlled switch (TR2) is controlled through a third controlled switch (TR3).

2. A control circuit as claimed in claim 1,
characterised in that said electronic circuit (U1) is respectively connected to resistors (R10) and (R32); the second end of said resistor (R10) being connected to the first end of a resistor (R23) and the point in common of said first and second controlled switches (TR1, TR2); said third controlled switch (TR3) receiving, through a resistor (R31), the control signal simultaneously with the first controlled switch (TR1) from said electronic circuit (U1) through said resistor (R32).

3. A control circuit as claimed in claim 2,
characterised in that in case of short circuit of said first controlled switch (TR1), interruption means constituted by said second (TR2) and third (TR3) controlled switches, said resistors (R10, R31 and R32) and said electronic circuit (U1), interrupt the supply to the electric motor (M1), so as to cause the electric motor to stop for at least all the time in which the short circuit conditions remain.

4. A control circuit as claimed in claim 3,
characterised in that said interruption means (TR3, TR2, R31, R32, U1, R10), in the case of short circuit of said first controlled switch (TR1), cause the interruption of the supply of control signals from said electronic circuit (U1) to the other controlled switch (TR2).

5. A control circuit as claimed in claim 3,
characterised in that said interruption means (TR3, TR2, R31, R32, U1, R10) provide once again power supply to the electric motor (M1) when the short circuit conditions of the first (TR1) of the two controlled switches (TR1, TR2) are over.

6. A control circuit as claimed in claim 3,
characterised in that said interruption means (TR3, TR2, R31, R32, U1, R10) do not intervene in the operation of the circuit whenever a short circuit of the second (TR2) of said controlled switches (TR1 and TR2) occurs.

## Patentansprüche

1. Steuerschaltung für einen Elektromotor der zur Erzeugung der Rotation der Trommel einer Waschmaschine verwendeten Art, umfassend eine elektronische Schaltung (U1) zum Ermitteln der Rotationsgeschwindigkeit des Motors (M1) und zum Steuern eines ersten gesteuerten Schalters (TR1) zur Einstellung der Rotationsgeschwindigkeit des Motors (M1) durch Variieren von Zeitabschnitten, während welcher der Motor (M1) mit Strom versorgt wird; einen zweiten gesteuerten Schalter (TR2),' der mit dem ersten gesteuerten Schalter (TR1) und dem Elektromotor (Ml) in Reihe geschaltet ist, wobei der zweite gesteuerte Schalter (TR2) durch die elektronische Schaltung (U1) gesteuert wird, um im wesentlichen in denselben Zeitabständen zu leiten wie der erste gesteuerte Schalter (TR1);
dadurch gekennzeichnet,
daß die gesteuerten Schalter (TR1, TR2) Rücken an Rücken angeordnet sind und der zweite gesteuerte Schalter (TR2) durch einen dritten gesteuerten Schalter (TR3) gesteuert wird.

2. Steuerschaltung nach Anspruch 1,
dadurch gekennzeichnet,
daß die elektronische Schaltung (U1) jeweils mit Widerständen (R10) und (R32) verbunden ist, wobei das zweite Ende des Widerstands (R10) mit dem ersten Ende eines Widerstands (R23) und dem gemeinsamen Kontakt des ersten und zweiten gesteuerten Schalters (TR1, TR2) verbunden ist und wobei der dritte gesteuerte Schalter (TR3) von der elektronischen Schaltung (U1) durch einen Widerstand (R31) das Steuersignal gleichzeitig erhält wie der erste gesteuerte Schalter (TR1) durch den Widerstand (R32).

3. Steuerschaltung nach Anspruch 2,
dadurch gekennzeichnet,
daß im Falle eines Kurzschlusses des ersten gesteuerten Schalters (TR1) Unterbrechermittel, die durch den zweiten (TR2) und den dritten (TR3) gesteuerten Schalter, die Widerstände (R10, R31 und R32) und die elektronische Schaltung (U1) gebildet werden, die Stromzufuhr zum Elektromotor (M1) unterbrechen, um zu bewirken, daß der Elektromotor mindestens während der gesamten Zeit stehenbleibt, in der die Kurzschlußbedingungen herrschen.

4. Steuerschaltung nach Anspruch 3,
dadurch gekennzeichnet,
daß die Unterbrechermittel (TR3, TR2, R31, R32, U1, R10) im Falle eines Kurzschlusses des ersten gesteuerten Schalters (TR1) die Unterbrechung der Zufuhr von Steuersignalen von der elektronischen Schaltung (U1) zu dem anderen gesteuerten Schalter (TR2) bewirken.

5. Steuerschaltung nach Anspruch 3,
dadurch gekennzeichnet,
daß die Unterbrechermittel (TR3, TR2, R31, R32, U1, R10) wieder für die Stromzufuhr zum Elektromotor (M1) sorgen, wenn die Kurzschlußbedingungen des ersten (TR1) der zwei gesteuerten Schalter (TR1, TR2) wieder aufgehoben sind.

6. Steuerschaltung nach Anspruch 3,
dadurch gekennzeichnet,
daß die Unterbrechermittel (TR3, TR2, R31, R32, U1, R10) nicht in den Betrieb der Schaltung eingreifen, wenn ein Kurzschluß in dem zweiten (TR2) der gesteuerten Schalter (TR1 und TR2) auftritt.

## Revendications

1. Circuit de commande pour un moteur électrique du type utilisé pour faire tourner le tambour d'une machine lave-linge, comprenant un circuit électronique (U1) pour détecter la vitesse de rotation du moteur (M1) et commander un premier commutateur commandé (TR1) afin d'ajuster la vitesse de rotation du moteur (M1) en faisant varier les durées au cours desquelles le moteur (M1) est alimenté en électricité ; un second commutateur commandé (TR2) étant connecté en série audit premier commutateur commandé (TR1) et audit moteur électrique (M1), ledit second commutateur commandé (TR2) étant commandé par le circuit électronique (U1) de manière à conduire sensiblement dans les mêmes intervalles de temps que ledit premier commutateur commandé (TR1) ; caractérisé en ce que lesdits commutateurs commandés (TR1, TR2) sont disposés en opposition et ledit second commutateur commandé (TR2) est commandé par l'intermédiaire d'un troisième commutateur commandé (TR3).

2. Circuit de commande selon la revendication 1, caractérisé en ce que ledit circuit électronique (U1) est respectivement connecté aux résistances (R10) et (R32) ; la seconde borne de ladite résistance (R10) étant connectée à la première borne d'une résistance (R23) et au point en commun desdits premier et second commutateurs commandés (TR1, TR2) ; ledit troisième commutateur commandé (TR3) recevant, par l'intermédiaire d'une résistance (R31), le signal de commande simultanément avec le premier commutateur commandé (TR1) provenant dudit circuit électronique (U1) par l'intermédiaire de ladite résistance (R32).

3. Circuit de commande selon la revendication 2, caractérisé en ce qu'en cas de court-circuit dudit premier commutateur commandé (TR1), des moyens d'interruption constitués par lesdits second (TR2) et troisième (TR3) commutateurs commandés, lesdites résistances (R10, R31 et R32) et ledit circuit électronique (U1) interrompent l'alimentation du moteur électrique (M1) de manière à amener le moteur électrique à s'arrêter pendant au moins une durée au cours de laquelle demeurent les conditions de court-circuit.

4. Circuit de commande selon la revendication 3, caractérisé en ce que lesdits moyens d'interruption (TR3, TR2, R31, R32, U1, R10), dans le cas d'un court-circuit dudit premier commutateur commandé (TR1), provoquent l'interruption de la transmission des signaux de commande provenant dudit circuit électronique (U1) à l'autre commutateur commandé (TR2).

5. Circuit de commande selon la revendication 3, caractérisé en ce que lesdits moyens d'interruption (TR3, TR2, R31, R32, U1, R10) fournissent à nouveau l'alimentation électrique au moteur électrique (M1) lorsque les conditions de court-circuit du premier (TR1) des deux commutateurs commandés (TR1, TR2) sont terminées.

6. Circuit de commande selon la revendication 3, caractérisé en ce que lesdits moyens d'interruption (TR3, TR2, R31, R32, U1, R10) n'interviennent pas dans le fonctionnement du circuit à chaque fois que survient un court-circuit du second (TR2) desdits commutateurs commandés (TR1 et TR2).
